# EUROPEAN PATENT SPECIFICATION

(11) **EP 3 129 328 B1**
(45) Date of publication and mention of the grant of the patent: **17.06.2020**
(21) Application number: 15717348.5
(22) Date of filing: 02.04.2015
(51) Int. Cl.: C03B 37/012

(54) **METHOD FOR MAKING SOOT PREFORMS AND GLASS OPTICAL FIBERS**
VERFAHREN ZUR HERSTELLUNG VON RUSSVORFORMEN UND OPTISCHEN GLASFASERN
PROCÉDÉ DE FABRICATION DE PRÉFORMES DE SUIE ET DE FIBRES OPTIQUES DE VERRE

(30) Priority: 08.04.2014 US 201414247894
(43) Date of publication of application: 15.02.2017
(73) Proprietor: Corning Incorporated, Corning, New York 14831 (US)
(72) Inventor: LI, Ming-Jun, Horseheads, New York 14845 (US); LUO, Xiaoming, Painted Post, New York 14870 (US); MCCARTHY, Joseph Edward, Hornell, New York 14843 (US); PENG, Gaozhu, Horseheads, New York 14845 (US); STONE, Jeffery Scott, Addison, New York 14801 (US); TANDON, Pushkar, Painted Post, New York 14870 (US); ZHOU, Chunfeng, Painted Post, New York 14870 (US)
(74) Representative: Elkington and Fife LLP
(86) International application number: PCT/US2015/023976
(87) International publication number: WO 2015/157073

(56) References cited:
- WO-A1-2014/034774
- WO-A1-2014/129553
- US-A- 5 149 349
- US-A1- 2007 062 337

## Description

### FIELD OF THE INVENTION

The present invention generally relates to a method for making a preform including the step of drilling holes in a soot blank for placement of core canes and a method for forming an optical fiber from such a preform.

### TECHNICAL BACKGROUND

Data transfer is fast approaching ultimate capacity limits for single mode optical fiber transmission systems. The use of multicore optical fibers has emerged as one solution which enables further growth in the capacity of optical fibers. Multicore optical fibers permit parallel transmission using space-division multiplexing. Multicore optical fibers increase transmission capacity by N-fold, where "N" is the number of cores in the multicore optical fiber. Several conventional methods for manufacturing multicore optical fibers are complicated and are not well-suited for large volume production. In a stack and draw process, core glass rods are typically stacked and inserted in a glass tube to form a preform. Such a method is generally complicated and not easily scaled. In another method, holes are drilled in a glass substrate and core canes are placed in the hole. However, it is difficult to drill accurately into a glass rod, and an expensive high precision ultrasonic drilling machine is required. Even with such a drilling machine, the distance that the hole can be drilled is limited, thereby limiting the preform size.
US 2007/062337 relates to a method of producing a preform for a holey optical fiber having at least one hole longitudinally extending therethrough.

### SUMMARY

According to one embodiment, a method of forming an optical fiber includes the steps of forming a soot blank of a silica-based cladding material, wherein the soot blank has a top surface and a bulk density of between 1.0 g/cm³ and 1.6 g/cm³. At least one hole is drilled in the top surface of the soot blank. At least one core cane member is positioned in the at least one hole. The soot blank and the at least one soot core cane member are consolidated to form a consolidated preform. The consolidated preform is drawn into an optical fiber.

In another embodiment, a method of forming a soot blank includes the steps of forming a soot body using a silica-based soot material. The soot body is partially consolidated to form a soot blank with a top surface and a bulk density of between 1 g/cm³ and 1.6 g/cm³. A plurality of holes is drilled into the top surface of the soot blank.

In yet another embodiment, a method of forming a multicore optical fiber includes the steps of forming a soot body of a silica-based material. The soot body is partially consolidated to form a soot blank with a bulk density of between 1 g/cm³ and 1.6 g/cm³ and a top surface with a surface density of less than 1.6 g/cm³ and a bottom surface opposite the top surface. A plurality of holes are drilled in the top surface, wherein the holes do not reach the bottom surface. A plurality of core canes are inserted into the plurality of drilled holes. The soot blank and the core canes are consolidated to form a consolidated preform. The consolidated preform is drawn into a multicore optical fiber.

Additional features and advantages will be set forth in the detailed description which follows.

The method disclosed herein is more easily scalable, and results in a more economical and less complicated production process for making preforms and optical fibers, particularly multicore optical fibers, than known methods for production of these preforms and optical fibers.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiments, and together with the description serve to explain principles and operation of the various embodiments.

### BRIEF DESCRIPTION OF THE DRAWINGS

Figure 1 is a process flow chart of one method for forming optical fibers according to the present disclosure;
Figure 2 is a top perspective view of a soot body according to the present disclosure;
Figure 3 is a top perspective view of a soot blank with holes drilled therein formed from the soot body of Figure 2;
Figure 4 is a top perspective view of the soot blank of Figure 3 with core canes positioned therein;
Figure 5 is a top perspective view of another embodiment of a soot body according to the present disclosure;
Figure 6 is a top perspective view of a soot blank with holes drilled therein formed from the soot body of Figure 5;
Figure 7 is a top perspective view of the soot blank of Figure 6 with core canes and a glass rod positioned therein
Figure 8 is a top perspective view of a preform according to the present disclosure formed from the soot blank shown in Figure 7;
Figure 9 is a top perspective view of an optical fiber drawn from the preform shown in Figure 8;
Figure 10A is a top plan view of a soot blank with a square configuration with four drilled holes;
Figure 10B is a top plan view of a soot blank with a 2x4 configuration with eight drilled holes;
Figure 10C is a top plan view of a soot blank with a hexagonal lattice configuration with seven drilled holes; and
Figure 10D is a top plan view of a soot blank with a ring configuration with twelve drilled holes.

### DETAILED DESCRIPTION

Reference will now be made in detail to the present preferred embodiments, examples of which are illustrated in the accompanying drawings. Whenever possible, the same reference numerals will be used throughout the drawings to refer to the same or like parts.

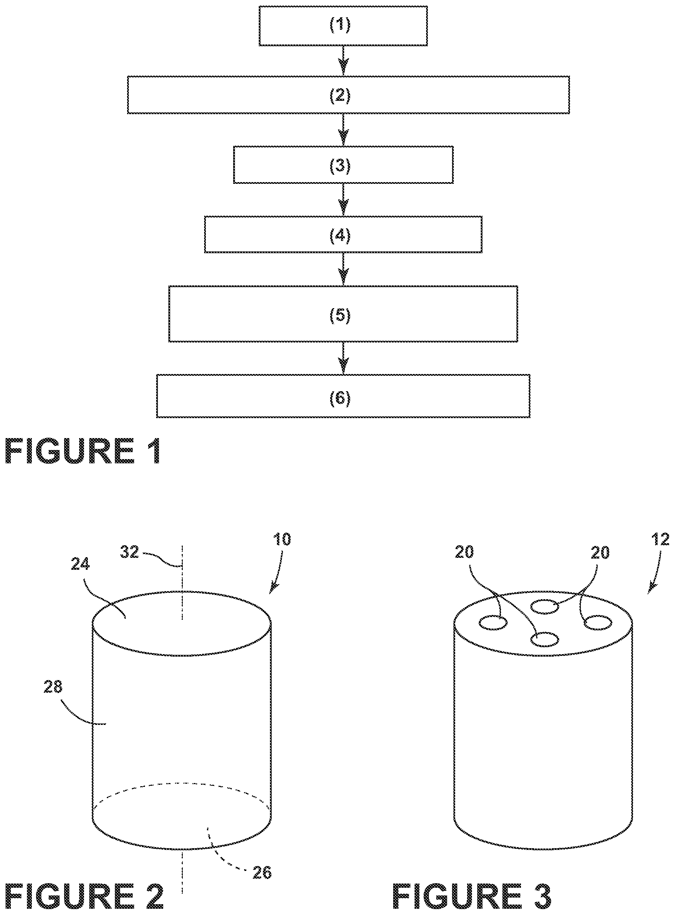

One embodiment of the method for forming preforms and ultimately optical fibers is generally depicted in Figure 1. Figures 2-9 depict the formation of a soot body 10, a soot blank 12, a preform 14, and an optical fiber 16 at various steps throughout the method that is depicted in Figure 1. In the embodiment depicted in Figure 1, the method of forming the optical fiber 16 includes the steps of (1) forming the soot body 10 and (2) partially consolidating the soot body 10 to form the soot blank 12. (3) Holes 20 are then drilled in the partially consolidated soot blank 12, and (4) core canes 22 are inserted into the holes 20. (5) The soot blank 12 and the core canes 22 are then consolidated to form the glass preform 14. (6) The glass preform 14 is drawn to form the optical fiber 16. The process as described herein is particularly useful in the formation of multicore optical fibers 16, but can also be used for the preparation of single core optical fibers 16. Multicore optical fibers 16 are desirable to allow parallel transmission through space-division multiplexing. The transmission capacity of the fiber 16 is increased by N-fold, where N is the number of cores in the multicore optical fiber 16. Therefore, multicore optical fibers 16 allow for enhanced transmission with respect to single core optical fibers 16.

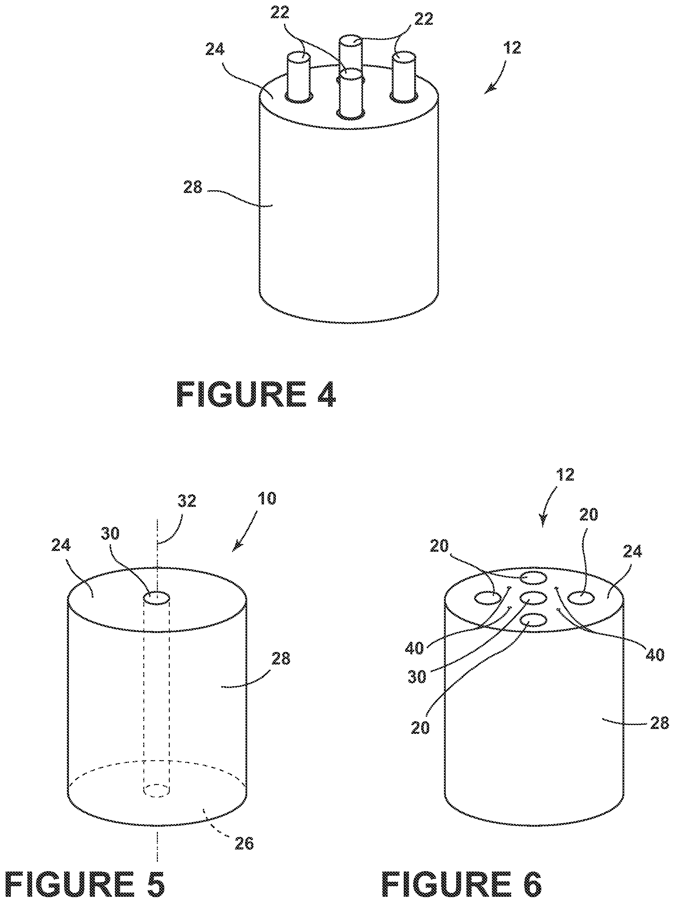

Figures 2-4 depict an embodiment of a soot body 10 and soot blank 12 formed via a soot pressing method, and Figures 5-9 depict an embodiment of a soot body 10 and soot blank 12 formed via an outside vapor deposition ("OVD") process. The method of drilling the soot blank 12 described herein can be used with either of these formation methods for the soot body 10, as further described below.

As depicted in Figures 2 and 5, the soot body 10 is a generally cylindrical shape, with a top surface 24, a bottom surface 26 opposite the top surface 24, and a circumferential wall 28 interconnecting the top surface 24 and the bottom surface 26. The soot body 10 is made of a silica-based material which is appropriate for cladding of optical fibers 16. In one embodiment, the soot body 10 is a SiO₂ material. In alternate embodiments, the SiO₂ material may be doped with elements such as F, B, Ge, Er, Ti, Al, Li, K, Rb, Cs, Cl, Br, Na, Nd, Bi, Sb, Yb, or combinations thereof, or other elements known for use in cladding of optical fibers 16.

The embodiment of a soot body 10 shown in Figure 2 is formed via a soot pressing process. Generally, in the soot pressing process, particulate soot material is deposited into a mold cavity, and pressure is applied against the particulate soot material in the mold to form a compacted soot body 10. The soot pressing process is usually carried out at pressures of from 172.37 kPa to 1723.69 kPa (25 psig to 250 psig), and the particulate soot material can be radially compressed, axially compressed, laterally compressed, or compressed in any other method to form a compacted soot body 10. Compacted soot bodies 10 formed via soot pressing processes generally have an initial bulk density of 0.8 g/cm³. The compacted soot body 10 is preferably partially consolidated, to reach a preferred bulk density and surface density for drilling, as further described below.

The embodiment of a soot body 10 shown in Figure 5 is formed via an OVD process. In this process, generally an inert rod is layered with silica-based soot particles applied around the perimeter of the inert rod. The soot particles are formed by passing ultrapure vapors, such as silicon chloride through a burner, where the vapors react in the flame to form fine silica-based soot particles that are then deposited on the inert rod. The inert rod is rotated during deposition, to form a uniform soot body 10 around the inert rod. After deposition is complete, the inert rod is preferably removed from the soot body 10, leaving a central hole 30 through a center axis 32 of the soot body 10, as shown in Figure 5. The soot density after the OVD process is typically around 0.5 g/cm³. To increase the bulk density of the soot body 10 to the desired range, the soot body 10 is preferably partially consolidated to reach the preferred bulk density and surface density for drilling, as further described below. Alternative formation methods for forming the soot body 10 can also be used, such as a vapor axial deposition ("VAD") process, or other known processes.

After initial formation using the soot pressing process, OVD process, VAD process, or other known processes, the soot body 10 is preferably partially consolidated to reach the predetermined bulk density of a soot blank 12 prior to drilling. Partial consolidation includes heating the soot body 10 to a temperature lower than the normal sintering peak temperature for the material used to form the soot body 10, optionally under a helium atmosphere. The exposure time and temperature will change depending on the size of the soot body 10 and on the composition or presence of any dopants in the silica-based soot material. In certain embodiments, if the soot body 10 has a density within the desired range without partial consolidation due to the method of formation of the soot body 10, then a separate partial consolidation step is unnecessary and is not required to form a soot blank 12 according to the present disclosure.

Soot bodies 10 according to the present disclosure preferably have a diameter of between 40 mm and 200 mm, with a preferred length of 10 cm to 100 cm. In general, for soot bodies 10 in this approximate size range, partial consolidation temperatures preferably range from 700°C to 1300°C for periods of time between 1 hour and 3 hours to create a partially consolidated soot blank 12 with porous soot material which is strengthened by the formation of glass necks between individual particles. In some embodiments, after holding the soot body 10 at the partial consolidation temperature for the predetermined time to form the soot blank 12, the soot blank 12 is held at a temperature that is elevated with respect to room temperature, but which is less than the partial consolidation temperature for a period of time to allow the soot blank 12 to further consolidate and to cool more slowly than if the soot blank 12 was returned immediately to room temperature.

The preferred bulk density of the soot blank 12 after partial consolidation is between 1 g/cm³ and 1.6 g/cm³, and more preferred is a bulk density of between 1.2 g/cm³ and 1.5 g/cm³. Another preferred bulk density is a bulk density of 1.2 g/cm³. A preferred surface density of the soot blank 12 is less than 1.6 g/cm³, and an even more preferred surface density of the soot blank 12 is less than 1.5 g/cm³ to facilitate drilling holes 20 into the soot blank 12. The bulk density and surface densities described herein are intended to provide sufficient body and mechanical strength for drilling, while being an easier material to drill than fully consolidated glass, allowing the drilling of deeper and more precise holes 20 in the soot blank 12 than would be possible into a fully consolidated glass preform.

After forming, and optionally partially consolidating, the soot blank 12, the plurality of holes 20 are drilled in the top surface 24 of the soot blank 12 in a predetermined configuration to accommodate core canes 22, as shown in the embodiments depicted in Figures 3 and 6. In these embodiments four holes 20 are drilled in the top surface 24 of the soot blanks 12 to accommodate four core canes 22 for a multicore optical fiber 16 with four transmission pathways. The holes 20 drilled in the soot blanks 12 to accommodate core canes preferably have a diameter of from 5 mm to 20 mm. The drilled holes 20 preferably do not extend through the bottom surface 26 of the soot blank 12, leaving at least a small portion of the soot blank 12 in place below the holes 20 to support the core canes 22.

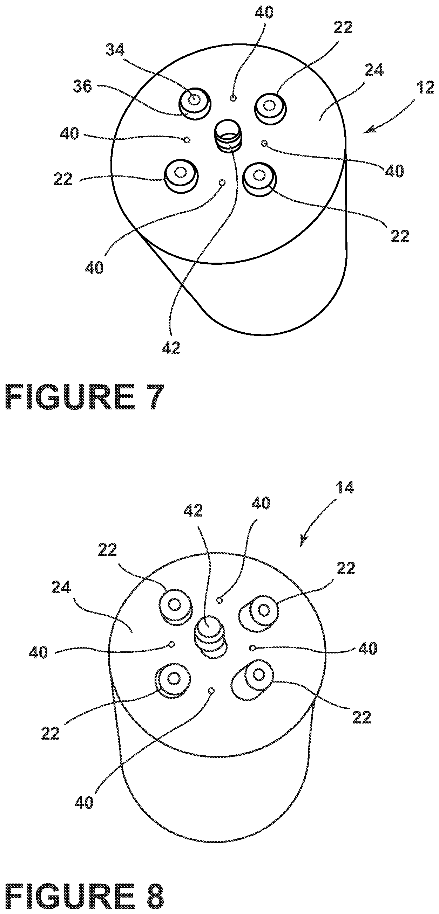

As shown in the embodiments depicted in Figures 4 and 7, after drilling holes 20 in the top surface 24 of the soot blank 12, core canes 22 are inserted into the drilled holes 20. Core canes 22 for use in the presently disclosed embodiments preferably have circular cross sections. The core canes 22 for use in the present disclosure are preferably made with a silica-based material, at least a portion of which is at least partially consolidated, and at least a portion of which is a transmissive core glass for an optical fiber. The core cane 22 optionally includes an inner portion 34 which is formed with a transmissive glass and an outer portion 36 which is formed with a cladding material. Germanium is commonly used as a doping agent to form transmissive glass for the core cane 22. Alternatively, the outer portion 36 of the core cane 22 can be a soot cladding material that is not consolidated. Additionally, core canes 22 for use in the present disclosure can be formed using any known processes, such as soot pressing, OVD process, VAD processes, or any other known process for forming core canes 22, whether or not fully consolidated prior to forming the preform 14. Any known alternatives for the formation of core canes 22 can be used. The core canes 22 for use in the present disclosure can be designed for multimode fiber applications, polarization maintaining fiber applications, photonic crystal fiber applications, as well as single mode multicore fiber applications and single-core fiber applications. The core canes 22 for use in the embodiments depicted in Figures 4 and 7 also have a diameter that is at least slightly less than the drilled holes 20, allowing insertion of the core canes 22 into the drilled holes 20 in the top surface 24 of the soot blank 12.

In addition to the holes 20 drilled to accommodate core canes 22, as shown in the embodiment depicted in Figure 6, additional holes 40 can be drilled in the top surface 24 for the insertion of stress rods, metallic rods, conductive or shielding wires or powders, or semiconducting rods or powders. The soot blank 12 drilling method as described herein can accommodate various optical fiber designs and predetermined arrangements easily by the drilling of additional holes 40 or holes of varying sizes. The holes 20, 40 can be drilled in the top surface 24 in whatever predetermined arrangement is desired for the intended end use. The additional holes 40 can be filled before consolidation, or can be left open and filled following consolidation.

In the embodiment depicted in Figures 5-9, where the soot body 10 is formed via an OVD process, an additional glass rod 42 is inserted into the central hole 30. The glass rod 42 is preferably the same material as the soot material used to form the soot body 10. The glass rod 42 operates as a filler of the cladding material that makes up the soot body 10, and is generally not the same material or construction as a the core cane 22, though the central hole 30 could be used for insertion of an additional core cane 22 if desired.

The embodiment shown in Figure 8 is a consolidated preform 14 formed from the soot blank 12 shown in Figure 7. The embodiment shown in Figure 8 is a consolidated glass preform 14, with a square 4-fiber configuration and a central hole 30 sealed with a glass rod 42. After inserting the core canes 22, and optionally the glass rod 42 or other stress rods, metallic rods, conductive or shielding wires or powders, or semiconducting rods or powders, the soot blank 12 and core canes 22 are consolidated to form a consolidated glass preform 14. To consolidate the soot blank 12 and the core canes 22, the soot blank 12 and the core canes 22 are heated to a final sintering temperature and held at the temperature for a time sufficient to allow glass sintering of the soot blank 12 and the core canes 22. In certain embodiments, preparatory steps such as a helium purging or chlorine drying of the soot blank 12 are carried out prior to heating the soot blank 12 to the sintering temperature. Additionally, in certain embodiments the consolidated preform 14 is held at an elevated temperature (higher than room temperature, lower than the sintering temperature) after sintering, which slows the cooling of the consolidated preform 14.

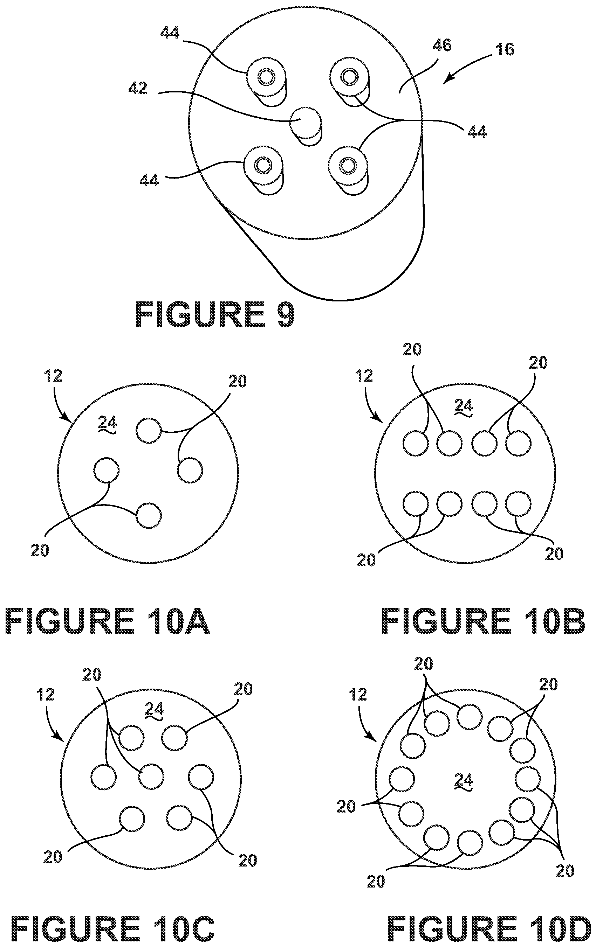

The embodiment depicted in Figure 9 is the optical fiber 16 drawn from the preform 14 depicted in Figure 8 using known fiber-drawing methods, such as stretching the preform 14 in a redraw furnace. The resulting optical fiber 16 is a multicore optical fiber 16 with four transmissive cores 44 embedded within an overcladding 46. The diameter of the preform 14 is reduced in the drawing process to lengthen the fiber 16, and the diameter of the core canes 22 within the preform 14 are reduced through the drawing process to form the transmissive cores 44.

Many configurations for the placement of the holes 20 in the top surface 24 of the soot blank 12 are possible when drilling the holes 20, and the configuration can be determined after production of the soot blank 12. Various sample configurations of the drilled holes 20 are shown in FIGS. 10A-10D. The examples shown in Figures 10A-10D are shown on a press-formed soot blank 12 (without a hole 30 from the removal of an inert rod). Figure 10A depicts a square configuration with four drilled holes 20. Figure 10B depicts a 2x4 configuration with eight drilled holes 20. Figure 10C depicts a hexagonal lattice configuration with seven drilled holes 20. Figure 10D depicts a ring configuration with twelve drilled holes 20. Alternative configurations, as desired for the formation of a chosen optical fiber 16, are easily created using the methods described herein.

In one example, 3,000 g of a SiO₂ particulate material is applied to the inert rod using an OVD process, with a post laydown density of 0.591 g/cm³. A soot body 10 having a length of 4 inches and a diameter of 63 mm was cut from the particulate material laid down using the OVD process and the inert rod was removed. The 3,000 g soot body 10 was partially consolidated by holding the soot body 10 at a temperature of 1275°C for a period of 3 hours in a helium-based atmosphere to form a partially consolidated soot blank 12, and then holding the soot blank 12 at 950°C for an additional period of 4 hours. After partial consolidation, the surface density of the soot blank 12 was 1.2 g/cm³, with a bulk blank density of 1.04 g/cm³. The partially consolidated soot blank 12 was drilled with four holes 20 in a square configuration, with each drilled hole 20 1 inch from the center axis 32 of the soot blank 12 and 1 inch from the other drilled holes 20. Each drilled hole 20 had an 11 mm diameter and was drilled 3.5 inches deep into the soot blank 12. One single mode fiber core cane 22 was inserted into each of the drilled holes 20, with each core cane 22 having a diameter of 10 mm. The glass rod 42 was inserted into the central hole 30 left by the removal of the inert rod to block the central hole 30. The soot blank 12, core canes 22, and glass rod 42 were placed in a sintering furnace for consolidation. The consolidation process included a 60 minute helium purge, followed by a 120 minute chlorine drying process. Once the drying was completed, an initial ramp to 1125°C for 60 minutes was initiated. Following the initial ramp to 1125°C, the temperature of the sintering furnace was set to 1450°C with a down feed velocity at 4.5 mm/minute for 60 minutes. After the 60 minute 1450°C hold, the consolidated preform 14 was raised out of the hot zone of the sintering furnace and held at a temperature of 950°C for 1 hour and then pulled from the sintering furnace and allowed to cool. The preform 14 was then stretched in a redraw furnace to a 15 mm diameter multicore optical fiber 16.

## Claims

1. A method of forming an optical fiber (16), comprising the following steps:
forming a soot blank (12) of a silica-based cladding material with the soot blank (12) having a top surface (24) and a bulk density of between 1.0 g/cm³ and 1.6 g/cm³;
drilling at least one hole (20)in the top surface (24) of the soot blank (12);
positioning at least one core cane member in the at least one hole;
consolidating the soot blank (12) and the at least one soot core cane member to form a consolidated preform (14); and
drawing the consolidated preform (14) into the optical fiber (16).

2. The method of claim 1, wherein forming a soot blank (12) includes the steps of:
compacting a silica-based soot material into a predetermined soot body (10); and
partially consolidating the compacted soot body (10) to form a soot blank (12) with the bulk density of between 1.0 g/cm³ and 1.6 g/cm³.

3. The method of claim 2, wherein the step of partially consolidating the compacted soot body (10) includes exposing the compacted soot material to a temperature that is less than a normal sintering temperature for the soot material.

4. The method of claim 1, wherein the step of forming a soot blank (12) includes the steps of:
applying a silica-based soot material around at least one rod to create a soot body (10); and
partially consolidating the soot body (10) to form a soot blank (12) with a bulk density of between 1.0 g/cm³ and 1.6 g/cm³.

5. The method of any of the preceding claims, wherein the soot blank (12) has a bulk density of from 1.0 g/cm³ to 1.5 g/cm³.

6. The method of any of the preceding claims, wherein the soot blank (12) has a diameter of from 40 mm to 200 mm, and a length of from 10 cm to 100 cm.

7. The method of any of the preceding claims, wherein the step of drilling at least one hole (20)includes drilling the at least one hole (20)with a diameter of from 5 mm to 20 mm.

8. The method of any of the preceding claims, wherein the step of drilling at least one hole (20)in the top surface (24) of the soot blank (12) includes drilling four holes (20) in a square pattern.

9. The method of any of the preceding claims, wherein the step of drilling at least one hole (20)in the top surface (24) of the soot blank (12) includes drilling seven holes (20) in a hexagonal lattice pattern.

10. The method of any of the preceding claims, wherein the step of drilling at least one hole (20) in the top surface (24) of the soot blank (12) includes drilling 12 holes (20) in a ring pattern.

11. A method for forming a soot blank (12), comprising the following steps:
forming a soot body (10) using a silica-based soot material;
partially consolidating the soot body (10) to form a soot blank (12) with a top surface (24) and a bulk density of between 1 g/cm³ and 1.6 g/cm³; and
drilling a plurality of holes (20) into the top surface (24) of the soot blank (12).

12. The method of forming a soot blank (12) of claim 11, wherein the step of forming a soot body (10) includes performing at least one process chosen from the group consisting of an outside vapor deposition process, a vapor axial deposition process, and a soot pressing process.

13. The method of forming a soot blank (12) of any of claims 11-12, wherein the step of partially consolidating the soot body (10) to form a soot blank (12) includes holding the soot body (10) at a temperature below the normal sintering peak temperature for a time sufficient to form a soot blank (12) with a bulk density of between 1.0 g/cm³ and 1.5 g/cm³, and a surface density of less than 1.6 g/cm³.

14. A method of forming a multicore optical fiber (16), comprising the following steps:
forming a soot body (10) of silica-based material;
pre-consolidating the soot body (10) to form a soot blank (12) with a bulk density of between 1 g/cm³ and 1.6 g/cm³, and a top surface (24) with a surface density of less than 1.6 g/cm³ and a bottom surface (26) opposite the top surface (24);
drilling a plurality of holes (20) in the top surface (24), wherein the holes (20) do not reach the bottom surface (26);
inserting a plurality of core canes (22) into the plurality of drilled holes (20);
consolidating the soot blank (12) and core canes (22) to form a consolidated preform (14); and
drawing the consolidated preform (14) into a multicore optical fiber (16).

15. The method of claim 14, wherein the step of consolidating the soot blank (12) includes the steps of:
purging the soot blank (12) under a helium atmosphere;
drying the soot blank (12) in the presence of chlorine;
ramping the temperature around the soot blank (12) to a first hold temperature;
increasing the temperature around the soot blank (12) to a second sinter temperature; and
decreasing the temperature around the soot blank (12) to a third cool down temperature.

## Patentansprüche

1. Verfahren zum Formen einer optischen Faser (16), umfassend die folgenden Schritte:
ein Formen eines Rußrohlings (12) aus einem siliziumdioxidbasierten Hüllmaterial, wobei der Rußrohling (12) eine obere Oberfläche (24) und eine Rohdichte von zwischen 1,0 g/cm³ und 1,6 g/cm³ aufweist;
ein Bohren mindestens eines Lochs (20) in der oberen Oberfläche (24) des Rußrohlings (12);
ein Positionieren mindestens eines Rohrkernelements in dem mindestens einen Loch;
ein Konsolidieren des Rußrohlings (12) und des mindestens einen Rußrohrkernelements, um eine konsolidierte Vorform (14) zu formen; und
ein Ziehen der konsolidierten Vorform (14) in die optische Faser (16).

2. Verfahren nach Anspruch 1, wobei das Formen eines Rußrohlings (12) die folgenden Schritte beinhaltet:
ein Kompaktieren eines siliziumdioxidbasierten Rußmaterials in einen vorgegeben Rußkörper (10); und
ein teilweises Konsolidieren des kompaktierten Rußkörpers (10), um einen Rußrohling (12) mit der Rohdichte von zwischen 1,0 g/cm³ und 1,6 g/cm³ zu formen.

3. Verfahren nach Anspruch 2, wobei der Schritt des teilweisen Konsolidierens des kompaktierten Rußkörpers (10) beinhaltet, das kompaktierte Rußmaterial einer Temperatur auszusetzen, die niedriger als eine normale Sintertemperatur für das Rußmaterial ist.

4. Verfahren nach Anspruch 1, wobei der Schritt des Formens eines Rußrohlings (12) die folgenden Schritte beinhaltet:
ein Auftragen eines siliziumdioxidbasierten Materials um eine Stange, um einen Rußkörper (10) zu erzeugen; und
ein teilweises Konsolidieren des Rußkörpers (10), um einen Rußrohling (12) mit einer Rohdichte von zwischen 1,0 g/cm³ und 1,6 g/cm³ zu formen.

5. Verfahren nach einem der vorangehenden Ansprüche, wobei der Rußrohling (12) eine Rohdichte von 1,0 g/cm³ bis 1,5 g/cm³ aufweist.

6. Verfahren nach einem der vorangehenden Ansprüche, wobei der Rußrohling (12) einen Durchmesser von 40 mm bis 200 mm und eine Länge von 10 cm bis 100 cm aufweist.

7. Verfahren nach einem der vorangehenden Ansprüche, wobei der Schritt des Bohrens mindestens eines Lochs (20) ein Bohren des mindestens einen Lochs (20) mit einem Durchmesser von 5 mm bis 20 mm beinhaltet.

8. Verfahren nach einem der vorangehenden Ansprüche, wobei der Schritt des Bohrens mindestens eines Lochs (20) in der oberen Oberfläche (24) des Rußrohlings (12) ein Bohren von vier Löchern (20) in einem quadratischen Muster beinhaltet.

9. Verfahren nach einem der vorangehenden Ansprüche, wobei der Schritt des Bohrens mindestens eines Lochs (20) in der oberen Oberfläche (24) des Rußrohlings (12) ein Bohren von sieben Löchern (20) in einem hexagonalen Gittermuster beinhaltet.

10. Verfahren nach einem der vorangehenden Ansprüche, wobei der Schritt des Bohrens mindestens eines Lochs (20) in der oberen Oberfläche (24) des Rußrohlings (12) ein Bohren von zwölf Löchern (20) in einem Ringmuster beinhaltet.

11. Verfahren zum Formen eines Rußrohlings (12), umfassend die folgenden Schritte: Formen eines Rußrohlings (10) mithilfe eines siliziumdioxidbasierten Rußmaterials;
ein teilweises Konsolidieren des Rußkörpers (10), um einen Rußrohling (12) mit einer oberen Oberfläche (24) und einer Rohdichte von zwischen 1 g/cm³ und 1,6 g/cm³ zu formen; und
ein Bohren einer Vielzahl von Löchern (20) in die obere Oberfläche (24) des Rußrohlings (12).

12. Verfahren zum Formen eines Rußrohlings (12) nach Anspruch 11, wobei der Schritt des Formens eines Rußrohlings (10) ein Durchführen mindestens eines Prozesses, ausgewählt aus der Gruppe, bestehend aus einem Außen-Dampfabscheidungsprozess, einem axialen Dampfabscheidungsprozess und einem Rußpressprozess, umfasst.

13. Verfahren zum Formen eines Rußrohlings (12) nach einem der Ansprüche 11 bis 12, wobei der Schritt des teilweisen Konsolidierens des Rußkörpers (10) zum Formen eines Rußrohlings (12) ein Halten des Rußkörpers (10) bei einer Temperatur unter der normalen Sinterspitzentemperatur für eine Zeit beinhaltet, die ausreicht, um einen Rußrohling (12) mit einer Rohdichte von zwischen 1,0 g/cm³ und 1,5 g/cm³ und einer Oberflächendichte von unter 1,6 g/cm³ zu formen.

14. Verfahren zum Formen einer optischen Faser mit mehreren Kernen (16), umfassend die folgenden Schritte:
ein Formen eines Rußkörpers (10) aus siliziumdioxidbasiertem Material;
ein Vorkonsolidieren des Rußkörpers (10), um einen Rußrohling (12) mit einer Rohdichte von zwischen 1 g/cm³ und 1,6 g/cm³, und einer oberen Oberfläche (24) mit einer Oberflächendichte von unter 1,6 g/cm³ und einer unteren Oberfläche (26) gegenüber der oberen Oberfläche (24) zu formen;
ein Bohren einer Vielzahl von Löchern (20) in der oberen Oberfläche (24), wobei die Löcher (20) nicht die untere Oberfläche (26) erreichen;
ein Einführen einer Vielzahl von Kernrohren (22) in die Vielzahl gebohrter Löcher (20); ein Konsolidieren des Rußrohlings (12) und der Kernrohre (22), um eine konsolidierte Vorform (14) zu formen; und
ein Ziehen der konsolidierten Vorform (14) in die optische Faser mit mehreren Kernen (16).

15. Verfahren nach Anspruch 14, wobei der Schritt des Konsolidierens des Rußrohlings (12) die folgenden Schritte beinhaltet:
ein Spülen des Rußrohlings (12) unter einer Heliumatmosphäre;
ein Trocknen des Rußrohlings (12) in Anwesenheit von Chlor;
ein Hochfahren der Temperatur um den Rußrohling (12) auf eine erste Haltetemperatur;
ein Erhöhen der Temperatur um den Rußrohling (12) auf eine zweite Sintertemperatur; und
ein Senken der Temperatur um den Rußrohling (12) auf eine dritte Abkühltemperatur.

## Revendications

1. Procédé de formation d'une fibre optique (16), comprenant les étapes suivantes :
formation d'une ébauche de suie (12) d'un matériau de gainage à base de silice avec l'ébauche de suie (12) ayant une surface supérieure (24) et une densité apparente comprise entre 1,0 g/cm³ et 1,6 g/cm³ ;
perçage d'au moins un trou (20) dans la surface supérieure (24) de l'ébauche de suie (12) ;
positionnement d'au moins un élément de canne de cœur dans l'au moins un trou ;
consolidation de l'ébauche de suie (12) et l'au moins un élément de canne de cœur de suie pour former une préforme consolidée (14) ; et
tirage de la préforme consolidée (14) dans la fibre optique (16).

2. Procédé selon la revendication 1, dans lequel la formation d'une ébauche de suie (12) inclut les étapes de :
compactage d'un matériau de suie à base de silice en un corps de suie prédéterminé (10) ; et
consolidation partielle du corps de suie compacté (10) pour former une ébauche de suie (12) avec la densité apparente comprise entre 1,0 g/cm³ et 1,6 g/cm³.

3. Procédé selon la revendication 2, dans lequel l'étape de consolidation partielle du corps de suie compacté (10) inclut l'exposition du matériau de suie compacté à une température qui est inférieure à une température de frittage normal pour le matériau de suie.

4. Procédé selon la revendication 1, dans lequel l'étape de formation d'une ébauche de suie (12) inclut les étapes de :
application d'un matériau de suie à base de silice autour d'au moins une tige pour créer un corps de suie (10) ; et
consolidation partielle du corps de suie (10) pour former une ébauche de suie (12) avec une densité apparente comprise entre 1,0 g/cm³ et 1,6 g/cm³.

5. Procédé selon l'une quelconque des revendications précédentes, dans lequel l'ébauche de suie (12) a une densité apparente comprise entre 1,0 g/cm³ et 1,5 g/cm³.

6. Procédé selon l'une quelconque des revendications précédentes, dans lequel l'ébauche de suie (12) a un diamètre compris entre 40 mm et 200 mm, et une longueur comprise entre 10 cm et 100 cm.

7. Procédé selon l'une quelconque des revendications précédentes, dans lequel l'étape de perçage d'au moins un trou (20) inclut le perçage de l'au moins un trou (20) avec un diamètre compris entre 5 mm et 20 mm.

8. Procédé selon l'une quelconque des revendications précédentes, dans lequel l'étape de perçage d'au moins un trou (20) dans la surface supérieure (24) de l'ébauche de suie (12) inclut le perçage de quatre trous (20) dans une configuration carrée.

9. Procédé selon l'une quelconque des revendications précédentes, dans lequel l'étape de perçage d'au moins un trou (20) dans la surface supérieure (24) de l'ébauche de suie (12) inclut le perçage de sept trous (20) dans une configuration de treillis hexagonale.

10. Procédé selon l'une quelconque des revendications précédentes, dans lequel l'étape de perçage d'au moins un trou (20) dans la surface supérieure (24) de l'ébauche de suie (12) inclut le perçage de 12 trous (20) dans une configuration annulaire.

11. Procédé de formation d'une ébauche de suie (12), comprenant les étapes suivantes : formation d'un corps de suie (10) en utilisant un matériau de suie à base de silice ;
consolidation partielle du corps de suie (10) pour former une ébauche de suie (12) avec une surface supérieure (24) et une densité apparente comprise entre 1 g/cm³ et 1,6 g/cm³ ; et
perçage d'une pluralité de trous (20) dans la surface supérieure (24) de l'ébauche de suie (12).

12. Procédé de formation d'une ébauche de suie (12) selon la revendication 11, dans lequel l'étape de formation d'un corps de suie (10) inclut l'exécution d'au moins un processus choisi dans le groupe constitué d'un processus de dépôt en phase vapeur extérieur, un processus de dépôt axial en phase vapeur, et un processus de pressage de suie.

13. Procédé de formation d'une ébauche de suie (12) selon l'une quelconque des revendications 11 à 12, dans lequel l'étape de consolidation partielle du corps de suie (10) pour former une ébauche de suie (12) inclut le maintien du corps de suie (10) à une température inférieure au pic de température de frittage normal pendant un temps suffisant pour former une ébauche de suie (12) avec une densité apparente comprise entre 1,0 g/cm³ et 1,5 g/cm³, et une densité de surface inférieure à 1,6 g/cm³.

14. Procédé de formation d'une fibre optique multicoeur (16), comprenant les étapes suivantes :
formation d'un corps de suie (10) d'un matériau à base de silice ;
pré-consolidation du corps de suie (10) pour former une ébauche de suie (12) avec une densité apparente comprise entre 1 g/cm³ et 1,6 g/cm³, et une surface supérieure (24) avec une densité de surface inférieure à 1,6 g/cm³ et une surface inférieure (26) opposée à la surface supérieure (24) ;
perçage d'une pluralité de trous (20) dans la surface supérieure (24), dans lequel les trous (20) n'atteignent pas la surface inférieure (26) ;
insertion d'une pluralité de cannes de cœur (22) dans la pluralité de trous percés (20) ; la consolidation de l'ébauche de suie (12) et des cannes de cœur (22) pour former une préforme consolidée (14) ; et
étirage de la préforme consolidée (14) en une fibre optique multicoeur (16).

15. Procédé selon la revendication 14, dans lequel l'étape de consolidation de l'ébauche de suie (12) inclut les étapes de :
purge de l'ébauche de suie (12) sous une atmosphère d'hélium ;
séchage de l'ébauche de suie (12) en présence de chlore ;
élévation progressive de la température autour de l'ébauche de suie (12) à une première température de maintien ;
augmentation de la température autour de l'ébauche de suie (12) à une deuxième température de frittage ; et
diminution de la température autour de l'ébauche de suie (12) à une troisième température de refroidissement.
